# FASCICULE DE BREVET EUROPEEN

(11) **EP 2 401 239 B1**
(45) Date de publication et mention de la délivrance du brevet: **25.08.2021**
(21) Numéro de dépôt: 10709913.7
(22) Date de dépôt: 26.02.2010
(51) Int. Cl.: C04B 20/00, C04B 28/02

(54) **MORTIER ISOLANT PULVERULENT, MORTIER ISOLANT EN COUCHE**
PULVERISOLIERMÖRTEL UND SCHICHTFÖRMIGER ISOLIERMÖRTEL
POWDER INSULATING MORTAR, AND LAYERED INSULATING MORTAR

(30) Priorité: 26.02.2009 FR 0951209; 08.10.2009 FR 0957004
(43) Date de publication de la demande: 04.01.2012
(73) Titulaire: Saint-Gobain Weber France, 77170 Servon (FR)
(72) Inventeur: DA SILVA, Claude, F-93600 Aulnay sous Bois (FR); LAMBLET, Marie, F-75020 Paris (FR)
(74) Mandataire: Saint-Gobain Recherche
(86) Numéro de dépôt international: PCT/FR2010/050334
(87) Numéro de publication internationale: WO 2010/097556

(56) Documents cités:
- EP-A1- 0 665 195
- CN-C- 100 337 967
- FR-A1- 2 861 399
- US-A- 4 234 344
- M.LOSIEWICZ,D.P.HALSEY,S.J.DEWS,P.OLOMAIYE ,F.C.HARRIS: "An investigation into the properties of micro-sphere insulating concrete" CONSTRUCTION AND BUILDING MATERIALS, vol. 10, no. 8, 1996, pages 583-588, XP002536659
- ANONYMOUS: "3M Scotchlite Glass Bubbles K Series S Series" 3M PRODUCT INFORMATION 2003, pages 1-8, XP002536919 Extrait de l'Internet: URL:http://multimedia.3m.com/mws/mediawebs erver?66666UuZjcFSLXTtNXMEl8&_EVuQEcuZgVs6 EVs6E666666--> [extrait le 2009-08-27]
- None

## Description

La présente invention concerne un nouveau mortier pulvérulent, ainsi que son utilisation en couche ou sous forme de plaque ou brique ou toute autre présentation appropriée pour revêtir des surfaces (bâtiments, en particulier des façades) ou éventuellement les constituer (des plaques pouvant servir par exemple à former des cloisons ou façades).

L'isolation thermique par l'extérieur peut être faite par des mortiers isolants thermiquement à enduire en forte épaisseur généralement quelques centimètres.

On connaît ainsi des mortiers inorganiques isolants thermiquement, typiquement des mortiers à matrices cimentaires et à base d'additifs isolants thermiquement tels que des particules de liège, des chutes/déchets plastiques (polyuréthane, pneu...), mortiers dont les propriétés thermiques sont limitées à 90 - 100 mW/m.K.

On connaît ainsi des mortiers inorganiques isolants thermiquement comportant des billes de polystyrène expansé, typiquement de quelques millimètres de diamètre, dont les propriétés thermiques sont limitées à 65 mW/m.K pour des taux de billes de l'ordre de 75% en volume de poudre.

L'article de Losiewicz et al. (Construction and Building Materials, Vol.10, No. 8, pp.583-588, 1996) décrit la possibilité d'utiliser des microsphères de type aluminosilicates dans des formulations de bétons. Comme la perlite ou la vermiculite, les microsphères permettent d'améliorer certaines propriétés, mais ne permet pas d'obtenir des valeurs de conductivité thermique du béton inférieures à 111 mW/m.K.

La présente invention a cherché quant à elle à mettre au point un mortier pulvérulent amélioré pour des surfaces de bâtiment, en particulier conférant une isolation thermique accrue et durable desdites surfaces sans que cette amélioration se fasse au détriment des autres propriétés du mortier, ceci sans engendrer de surcoût trop significatif, ce mortier étant notamment approprié pour le marché du neuf ou de la rénovation, pratique à manipuler et à poser selon des méthodes courantes.

A cet effet la présente invention propose un mortier pulvérulent éventuellement mélangé avec de l'eau (notamment prêt à gâcher, c'est-à-dire avant ajout de l'eau, et/ou d'autre(s) liquide(s) de gâchage) comprenant :
- au moins un liant hydraulique minéral,
- au moins 75% en volume ((par rapport au volume) de poudre de mortier) d'additifs isolants thermiquement sensiblement en forme de billes et de conductivité thermique inférieure ou égale à 55 mW/m.K, les additifs étant étanches à l'eau, et au moins 20% en volume de poudre desdits additifs, appelés microsphères isolantes, étant unicellulaires, c'est-à-dire dotés d'une coque externe fermée délimitant un cœur formé d'une unique cavité interne, et, étant microniques, de dimension caractéristique externe moyenne maximale inférieure à 0,5 mm, plus préférentiellement inférieure ou égale à 0,2 mm voire à 0,1 mm (pour accroître davantage les performances mécaniques), et notamment supérieure ou égale à 2 µm, voire supérieure ou égale à 10 µm.

- une majorité des microsphères isolantes présentent une densité réelle mesurée par pycnomètre à air inférieure ou égale à 0,25.

La Demanderesse a mis en avant que de manière surprenante, le choix de microsphères isolantes selon l'invention qui sont à la fois de forme adaptée et de taille submillimétrique, unicellulaire, à coque fermée (donc exempte de pores traversants) et de conductivité thermique suffisamment faible faisaient chuter de manière drastique la conductivité thermique de la couche ou du produit à base du mortier tout en gardant une cohésion satisfaisante de cette couche ou de ce produit.

Le caractère unicellulaire permet la présence d'une coque d'épaisseur maximale (pour une densité donnée), ce qui a pour avantage d'améliorer les propriétés mécaniques de telles sphères et donc d'éviter qu'elles ne se cassent, risquant alors de réduire significativement leurs capacités isolantes.

En particulier, la coque continue, empêche la rétention d'eau qui dégrade les propriétés isolantes.

L'étanchéité à l'eau peut être confirmée si le taux de gâchage en présence des additifs isolants du mortier selon l'invention n'est pas augmenté par rapport au taux de gâchage sans de tels additifs. En particulier pour des additifs millimétriques, tels que les billes en PS (polystyrène) expansé, il est possible de vérifier l'absence de prise en eau par les méthodes classiques.

Les microsphères restent évidemment étanches à l'eau après les opérations de fabrication du mortier, de gâchage et d'application/mise en oeuvre.

La coque externe délimitant le cœur (central), la microsphère est ainsi essentiellement en un seul matériau. Il n'est pas nécessaire par exemple de revêtir la microsphère d'une couche fonctionnelle quelconque, en particulier de type hydrophobe, ce qui engendre des surcoûts rédhibitoires.

Par sensiblement sphériques, on entend selon l'invention, un additif ayant un rapport de forme (défini comme le rapport entre la dimension maximale suivant une direction principale sur la dimension minimale suivant une direction sensiblement perpendiculaire) inférieur à 2. Les microsphères sont par exemple sphériques mais plus largement oblongues, ovoïdes, ellipsoïdales.

Les microsphères isolantes selon l'invention peuvent avoir une certaine distribution granulométrique par exemple de type gaussienne. Par dimension externe caractéristique moyenne maximale, on entend selon l'invention la moyenne des dimensions externes maximales mesurées sur l'ensemble de la population des microsphères isolantes. On peut utiliser comme critère de taille le paramètre bien connu D50 (le diamètre moyen D50 étant le diamètre tel que 50% des particules en volume ont une taille inférieure audit diamètre).

La conductivité thermique des additifs, notamment des microsphères isolantes selon l'invention (et du mortier selon l'invention) est mesurée de manière habituelle (à température ambiante et pression atmosphérique, notamment selon la norme EN NF 12664).

La densité réelle (c'est-à-dire la densité moyenne des particules unitaires de poudre, par opposition à la densité apparente (« bulk density ») portant sur le volume de poudre incluant l'air entre les particules) des microsphères isolantes à coque est inférieure ou égale à 0,25 voire à 0,15, en vue d'atteindre la faible conductivité thermique.

On peut recourir tout particulièrement à une mesure de densité réelle par pycnomètre à air et sélectionner une majorité des microsphères isolantes (de préférence au moins 80% d'entre elles, voire au moins 90%) présentant une densité réelle mesurée par pycnomètre à air inférieure ou égale à 0,25, préférentiellement inférieure ou égale à 0,15. En effet, une telle méthode de mesure traduit en outre l'absence de porosité ouverte nuisible (rupture de l'étanchéité à l'eau) dans la coque des microsphères isolantes selon l'invention (autrement dit la fermeture ou l'herméticité de la coque).

La coque peut éventuellement comprendre des porosités en masse (porosité fermée, c'est-à-dire des porosités non traversantes dans l'épaisseur de la coque) ou des porosités (ouvertes) sur sa surface interne (c'est-à-dire la surface de la coque délimitant/se trouvant du côté du cœur/de la cavité interne). La surface interne de la coque peut aussi être de préférence sensiblement lisse.

De manière avantageuse, le rapport entre la dimension externe maximale et l'épaisseur de la coque est supérieur à 60. Un tel critère assure que la densité des microsphères isolantes est suffisamment faible en vue d'atteindre la faible conductivité thermique.

Plus préférentiellement, pour au moins la majorité des microsphères isolantes (de préférence au moins 80% d'entre elles voire au moins 90%) :
- la conductivité thermique est inférieure ou égale à 50 mW/m.K, (respectivement inférieure ou égale 45 mW/m.K), et notamment le rapport entre la dimension externe maximale et l'épaisseur de la coque est supérieur ou égal à 80 (respectivement supérieur ou égal 120),
- voire même la conductivité thermique est inférieure ou égale à 40 mW/m.K, (respectivement inférieure ou égale 35 mW/m.K) et notamment le rapport entre la dimension externe maximale et l'épaisseur de la coque est supérieur ou égal à 130 (respectivement supérieur ou égal à 150).

Pour au moins une partie des microsphères isolantes (de préférence la majorité voire au moins 80% d'entre elles), la surface externe de la coque peut être également essentiellement (plus de 50% de la surface) exempte de pores borgnes (c'est-à-dire non traversants) de dimension maximale supérieure ou égale à 100 nm, ou même 10 nm pour limiter les risques de fractures.

Dans un mode de réalisation préféré, pour au moins la majorité des microsphères isolantes (de préférence au moins 80% d'entre elles voire au moins 90%), le cœur est rempli d'(au moins) un gaz plus isolant thermiquement que l'air notamment de conductivité thermique inférieure ou égale à 25 mW/m.K, voire inférieure ou égale à 15 mW/m.K, notamment un gaz piégé lors du procédé de fabrication des microsphères, par exemple :
- du SO₂, notamment inclus dans des microsphères de verre généralement à au moins 60% (en volume par rapport au volume intérieur de la sphère), typiquement de conductivité thermique de l'ordre de 9 mW/m.K,
- et/ou du CO₂ typiquement de conductivité thermique de l'ordre de 15 mW/m.K,
- et/ou des gaz organiques, notamment hydrocarbonés (aliphatiques, alicycliques, venant du pétrole ou du gaz naturel, ou synthétisés...) tels que l'(iso)pentane, l'(iso)butane, l'(iso)octane, et leurs mélanges notamment utilisés ou utilisables comme gaz d'expansion de microsphères polymères, typiquement de conductivité thermique de l'ordre de 10 à 15 mW/m.K.

Le caractère unicellulaire permet la présence d'une coque d'épaisseur maximale (pour une densité donnée), ce qui a pour avantage non seulement de consolider la coque mais aussi de conférer une meilleure étanchéité au gaz contenu, dans la durée. On préfère notamment une coque d'épaisseur supérieure à 100 nm. Pour une conductivité thermique donnée, on peut avoir une densité plus élevée grâce au gaz encapsulé.

Selon un mode de réalisation, au moins une partie des microsphères isolantes selon l'invention sont essentiellement inorganiques (95 % ou plus de matière inorganique), notamment de densité réelle inférieure ou égale à 0,2 par exemple :
- à base de matériau siliceux : verre (silicates ; en particulier borosilicates pour sa tenue chimique en milieu alcalin...) notamment de densité réelle inférieure ou égale à 0,2, et/ou de densité réelle caractéristique du matériau constitutif de la coque allant de 2 à 2,4,
- à base d'autres oxydes, de céramiques.

Les fabrications des microsphères de verre convenant pour l'invention sont décrites par exemple dans le document WO95/07177 A1, dans la publication de JK Cochran intitulée « ceramic hollow spheres and their applications », Current Opinion in Solid state and Materials Science 1998, 3, page 474 ; dans la publication de J Bertling et autres intitulée « hollow microspheres », Chemical Engineering and Technology 2004, 27 (8), page 829.

Selon un mode de réalisation, au moins une partie des microsphères isolantes selon l'invention sont (essentiellement) organiques (95 % ou plus de matière organique, par exemple à base de polymère, de (co)polymères thermoplastiques), notamment de densité réelle inférieure ou égale à 0,1, et/ou de densité réelle caractéristique du matériau constitutif de la coque allant de 0,85 à 1,1, généralement allant de 0,85 à 1.

On peut citer par exemple parmi les (co)polymères thermoplastique(s), le polychlorure de vinyle (PVC) et acrylonitrile, le polyéthylène, ...

Le mortier selon l'invention peut comprendre de préférence au moins 80%, voire 85% en volume (par rapport au volume) de poudre de mortier des additifs isolants thermiquement (sensiblement en forme de billes et de conductivité thermique inférieure ou égale à 55 mW/m.K, voire 50 mW/m.K) et jusqu'à 90% voire 95%.

Le mortier peut comprendre au moins 35% en volume (par rapport au volume) de poudre de mortier, voire au moins 50%, et même au moins 70% des microsphères selon l'invention (seules ou en mélange avec les autres additifs étanches à l'eau en forme de billes et à faible conductivité thermique) et préférentiellement jusqu'à 90% voire 95%.

Naturellement, on peut prévoir un mélange de microsphères isolantes essentiellement organiques et essentiellement inorganiques selon l'invention en particulier réparties ainsi (en conservant au moins 75%, voire 80% et même au moins 85% en volume (par rapport au volume de poudre de mortier) des additifs isolants) :
- de 40% à 60% en volume ((par rapport au volume) de poudre de mortier) de microsphères isolantes essentiellement organiques, notamment celles déjà décrites précédemment,
- de 60% à 40% en volume (de poudre de mortier) de microsphères isolantes essentiellement inorganiques notamment celles déjà décrites précédemment,

A cela s'ajoute au moins 3 %, de préférence au moins 5% en volume (de poudre de mortier) de liant(s) hydraulique(s), notamment à base de ciment(s), notamment Portland, de ciment de mélange pouzzolanique (cendres volantes, laitiers, pouzzolanes naturelles ou calcinées), de ciment alumineux, de ciment sulfoalumineux, et leurs mélanges, et de préférence moins de 20% en volume de liant.

Le mortier selon l'invention peut être en particulier exempt d'additifs isolants de type billes de polystyrène expansé ou au moins en proportion limitée à 5% en volume de poudre, car :
- d'un point de vue procédé de fabrication, les additifs de type billes de polystyrène expansé sont susceptibles d'être retrouvés de manière visible dans les productions de mortier « standard » consécutives sur la même ligne de fabrication,
- et/ou des mortiers avec de forts taux de billes de polystyrène expansé sont inhomogènes, notamment dans les sacs individuels.

Toutefois, pour réduire le taux de microsphères éventuellement plus onéreuses que ces billes et/ou pour conserver une ligne de fabrication existante impliquant des billes PS, le mortier selon l'invention peut comprendre au moins 80 voire même 85% en volume (de poudre de mortier) des additifs isolants dont :
- de 40% à 60% en volume (de poudre de mortier) des microsphères isolantes précitées,
- de 55% à 20% en volume (de poudre de mortier) desdits autres additifs, notamment les billes millimétriques polymériques (polystyrène expansé) déjà décrites, (notamment de diamètre moyen inférieur à 5 mm, voire à 3 mm, voire 2 mm, et de conductivité thermique inférieure ou égale à 40 mW/m.K),

A cela s'ajoute au moins 3 %, de préférence au moins 5% de liant hydraulique, notamment à base de ciment(s), notamment Portland, de ciment de mélange pouzzolanique (cendres volantes, laitiers, pouzzolanes naturelles ou calcinées), de ciment alumineux, de ciment sulfoalumineux, et leurs mélanges, et de préférence moins de 20% de volume de liant(s).

On observe ainsi qu'un tel mélange est particulièrement performant thermiquement.

Par ailleurs, pour abaisser le coût du mortier, on peut ajouter en outre d'autres additifs isolants millimétriques moins performants tels que des particules de liège, chutes/déchets plastiques (polyuréthane, pneu...) par exemple de 0% à 5% en volume de poudre.

Le liant essentiellement minéral joue notamment sur l'adhérence, la cohésion et la résistance du mortier. Le liant est généralement constitué de :
- ciment(s) (notamment ciment Portland, ciment de mélange pouzzolanique, de ciment alumineux, de ciment sulfoalumineux et le mélange desdits ciments),
- et/ou de plâtre, gypse, anhydrites,
- et peut également comprendre de la chaux (en particulier aérienne ou hydraulique).

Le liant est de granulométrie généralement répartie entre 0 et 200 µm.

Le taux (total) de liant(s) dans le mortier pulvérulent selon l'invention peut aller de 3 à 25% en volume de poudre, notamment :
- de 3 à 25% en volume (de poudre de mortier) de ciment(s) (seul ou en mélange) et/ou de plâtre, gypse, et/ou anhydrites, encore plus préférentiellement de 5 à 15%,
- de 0 à 15% en volume de poudre de mortier de chaux, notamment en remplacement partiel du ciment et/ou du plâtre, gypse, et/ou anhydrites, encore plus préférentiellement de 3 à 10%.

On peut ajouter des granulats, agrégats ou sables, qui jouent notamment sur la rhéologie, l'épaisseur, la dureté, l'aspect final et la perméabilité du mortier, et sont généralement formés de sables siliceux, calcaires et/ou silico-calcaires, présentant généralement une granulométrie comprise entre 100 µm et 5 mm, en particulier comprise entre 100 µm et 3 mm. Le taux de tels granulats du mortier pulvérulent peut être compris entre 0 et 5% en volume (de poudre de mortier).

Le mortier peut également comprendre des composants appelés fillers se présentant généralement sous forme de poudre, de granulométrie en particulier comprise entre 0 et 120 µm, ces fillers étant généralement calcaires ou siliceux. Le taux de fillers dans la composition du mortier prêt à gâcher peut être compris entre 0 et 10% en volume (de poudre de mortier), la somme totale de liant et de fillers pouvant être comprise entre 0 et 10% en volume (de poudre de mortier).

Le mélange peut encore comprendre des charges allégeantes, par exemple des fibres végétales, ces charges présentant une granulométrie généralement répartie entre 0 et 3 mm. Le taux de ces charges allégeantes dans la composition du mortier prêt à gâcher peut être compris entre 0 et 10% en volume de mortier.

On préfère toutefois des formulations sans ajout de granulats et/ou de telles charges ou de charges allégeantes, pour pouvoir encore augmenter le taux de liant et/ou le taux d'additifs isolants.

Au mortier selon l'invention peuvent également être ajoutés un ou des additifs ou adjuvants conférant des propriétés particulières, par exemple des agents rhéologiques, des agents rétenteurs d'eau, des agents entraîneurs d'air, des fibres à fonctionnalité rhéologique, des agents épaississants, des agents de protection biocides, des agents dispersants, des agents débullants, des pigments (en particulier des pigments minéraux), des accélérateurs et/ou des retardateurs, et/ou d'autres agents pour améliorer la prise, le durcissement, la stabilité du mortier après application, et/ou jouer sur la couleur, la mise en oeuvre du mortier, etc.

Au mortier selon l'invention peut notamment être ajoutés un ou des additifs ou adjuvants conférant des propriétés mécaniques : par exemple des fibres (cas des mortiers fibrés), de renfort (fibres thermoplastiques, de verre...), des additifs polymères en poudre pour l'adhésion, la cohésion, et la flexibilité...

Le taux de ces additifs et adjuvants dans la composition du mortier prêt à gâcher peut être de préférence de l'ordre de 5% en volume (de poudre de mortier), et est le plus souvent compris entre 0,1 et 5% en volume (de poudre de mortier).

Les microsphères isolantes mentionnées selon l'invention peuvent être ajoutées de façon pratique :
- à un mélange déjà formé de liant et de divers constituants précités, (il peut donc être ajouté à un mélange pré-existant lors de la fabrication du mélange),
- ou lors de la fabrication du mortier (prêt à gâcher ou mélangé à l'eau) à partir des divers constituants précités.

Le mortier pulvérulent selon l'invention se présente sous forme de poudre (avec ou sans fibres, billes...) préférentiellement sous sa forme prête à gâcher, avant ajout de l'eau permettant d'obtenir une texture crémeuse prête à être appliquée. A noter que la présente invention concerne le mortier sous sa forme prête à gâcher aussi bien que sous sa forme mélangée à l'eau.

Le mortier peut être utilisé comme mortier destiné à être rapporté (projeté, appliqué manuellement ou non, etc.) sur une surface (ou support), telle qu'une surface de mur ou de façade d'un édifice. Il peut également être utilisé une fois mis en forme (et durci), sous forme par exemple de plaque ou de brique, ou autre présentation utilisée en construction notamment pour revêtir des surfaces ou former des cloisons ou façades.

Les propriétés rhéologiques du mortier selon l'invention, une fois mélangé à l'eau en vue de son application, présentent la particularité :
- de permettre la projection du mortier,
- d'être favorables à un procédé d'enduction par projection ou application manuelle,
- de permettre son application sur surfaces verticales, (ne coulant pas),
- de favoriser le lissage de l'enduit, (en comparaison avec l'utilisation de particules millimétriques de type PS expansé en quantité supérieure ou égale à 70 %).

Le mortier selon l'invention à base de telles microsphères creuses présente également l'avantage d'apparaître plus lisse par rapport à un mortier isolant obtenu à partir d'inclusions millimétriques (billes PS expansées, mousses polymères, liège, chutes diverses...) en fort dosage, et peut être laissé nu ou recouvert d'une couche d'enduit de finition.

Il est facile à lisser après projection ou enduction manuelle, il en résulte un aspect visuel très proche d'un mortier « classique » (non isolant), aucun traitement supplémentaire ni ajout d'un mortier de finition ou d'un film supplémentaire n'étant alors nécessaire (le mortier pouvant cependant être muni de décorations supplémentaires telles que peintures, modénatures, matriçage ou structuration, etc.).

Le mortier selon l'invention est avantageusement conservé sous forme de poudre (par exemple en sac de mortier prêt à gâcher) avant son utilisation. Préalablement à son dépôt sur un support ou sa mise en forme, le mortier est normalement mélangé avec de l'eau, puis déposé sur une surface, par exemple une façade de bâtiment ou mis en forme (par exemple dans un moule ou sur une ligne de production comme explicité ultérieurement).

La présente invention concerne également un support tel qu'une façade de bâtiment, revêtu, d'un revêtement selon la revendication 11.

La surface ou le support recevant le mortier peut être fait en différents matériaux tels que béton ou parpaing, brique, ciment, chaux-ciment, maçonnerie, laine de verre ou roche, panneau de polystyrène, bois, fibro-ciment (par exemple, produits tels que décrits dans les brevets US-2005-0072056 et US-2005-0058817),

Le mortier selon l'invention peut notamment s'intégrer dans tout procédé d'isolation thermique par l'extérieur ; il répond aux normes de sécurité en vigueur dans ce domaine et présente notamment une durabilité et un vieillissement compatible avec son utilisation comme mortier de façade, en particulier ne présente ni dégradation ni fissuration à l'issue des cycles de vieillissement décrits par le guide EOTA utilisé pour les procédés d'isolation thermique par l'extérieur (ITE) avec mortier et/ou à l'issue des essais de vieillissement artificiels pour les revêtements pour extérieurs (ITE) selon la norme NF T 30-049 et/ou NF P 84-402 et/ou selon la norme EN1015-21 (compatibilité des mortiers par rapport aux supports), etc.

Le mortier après mélange notamment avec l'eau et/ou après application sur une surface se présente le cas échéant sous forme d'une crème ou d'une couche durcie ou d'un produit durci dans laquelle/lequel certains constituants ont le cas échéant réagi.

On peut abaisser encore la conductivité thermique du revêtement à 40 mW/m.K voire à 35 mW/m.K.

Dans toutes les configurations avec le mortier selon l'invention, le revêtement a une cohésion suffisante même à fort taux de microsphères (80% et au-delà), ce qui n'est pas le cas des mortiers classiques à base de billes de PS.

On observe par ailleurs que l'utilisation de telles microsphères n'augmente pas le risque de fissuration du mortier. Si nécessaire, la résistance en compression du revêtement peut être supérieure ou égale à 0,3 MPa encore plus préférentiellement supérieure ou égale à 0,4 MPa.

L'épaisseur (totale) du revêtement de mortier (après dépôt et, selon l'aspect désiré, grattage éventuel, etc) est de l'ordre de 1 à 10 cm, en particulier de 1 à 5 cm environ. Plusieurs couches peuvent être superposées, après séchage partiel de la couche déposée.

Avec un taux supérieur ou égal à 70% en volume (de poudre de mortier) de microsphères isolantes polymériques, on observe des propriétés de résilience.

Le revêtement réalisé peut être laissé nu ou recouvert d'un enduit de finition, peut être coloré dans la masse (du fait par exemple de la présence de pigments dans le mortier), peut également être structuré (doté d'effets de surface particuliers), par exemple par striation, estampage, ferrage, création de nervures, etc..., notamment au niveau du mortier.

L'hydratation et la réaction (prise, durcissement) du mortier ou de certains composants du mortier se fait généralement à température ambiante (en particulier entre 5 et 35°C).

La surface ou support devant recevoir le mortier est généralement propre, saine (ne risquant pas notamment de se fragmenter ou de s'effriter), dépoussiérée et sèche. Le cas échéant, elle peut avoir été préalablement traitée (par exemple décapée, ragréée, lavée, munie de renformis, calfeutrée, etc) par exemple pour égaliser la surface, la rendre apte à recevoir le mortier selon l'invention, colmater des fissures, participer à l'isolation du support, etc.

Le revêtement peut être réalisé par toute méthode permettant d'obtenir l'épaisseur et l'aspect voulus, par exemple en étalant manuellement le mortier choisi ou en le projetant à l'aide d'un dispositif à air comprimé, etc. L'application du mortier peut être faite le cas échéant en une ou plusieurs passes (selon par exemple l'épaisseur désirée, etc), appliquées frais sur frais ou le cas échéant durcies avant dépôt de la suivante. L'hydratation du mortier selon l'invention est avantageusement uniforme même si le support varie, évitant ainsi des différences de teintes du mortier durci.

En cas d'utilisation d'armatures de renfort (par exemple sous forme de grilles de fibres de renfort), notamment en isolation thermique par l'extérieur, ces dernières peuvent être incorporées dans une couche (le cas échéant une des passes) de mortier, encore frais, déposées sur la surface de pose. En cas de débordement, le mortier peut le cas échéant être nettoyé, par exemple à l'eau avant séchage ou brossé après séchage.

La présente invention concerne également un matériau de construction, sous forme d'une plaque ou d'une brique, pour revêtir des surfaces (en particulier de bâtiments) ou les constituer, obtenu à partir du (ou à base du) mortier pulvérulent selon l'invention.

Notamment, une plaque, de dimensions allant jusqu'à 60X 250 cm (notamment 60X120 cm) et d'épaisseur comprise entre 2 mm et 1 cm, peut être réalisée en injectant un mortier selon l'invention (en particulier avec un liant à base de ciment ou de gypse ou de plâtre), après mélange avec de l'eau, dans un moule, et en laissant mûrir et/ou sécher jusqu'à durcissement suffisant pour permettre notamment sa manipulation.

Dans un autre mode de réalisation, le mortier (notamment avec un liant à base de plâtre et/ou de gypse), peut être moulé sous forme de brique(s) ou de carreau(x), de dimensions de l'ordre de 50X50 cm et d'épaisseur de l'ordre de 5 à 10 cm, ces briques ou carreaux pouvant servir par exemple à former des cloisons ou façades.

Le cas échéant, les plaques notamment (en particulier les plaques à base de ciment et/ou plâtre et/ou gypse) peuvent être revêtues de couche(s) (telles que des couches protectrice(s) ou de renforcement ou favorisant l'adhésion sur une surface ou conférant un meilleur aspect de surface ou permettant l'application directe de peinture ou de colle ou d'enduit, etc.), par exemple à base de papier (cellulose, kraft...) et/ou renforcées par exemple par une ou des grilles de verre, un ou des tissus ou non tissés, etc. Selon une variante de réalisation d'une plaque, une plaque munie de couche(s) de papier peut être obtenue en faisant couler le mortier (notamment avec un liant à base de plâtre et/ou de gypse) sur un papier défilant sur une ligne de production, en particulier sur un tapis vibrant (pour étaler uniformément le mortier), en rajoutant le cas échéant une seconde feuille de papier sur le mortier, puis en séchant l'ensemble avant découpe sous la forme désirée.

D'autres procédés (extrusion, pressage, etc.) pour obtenir des plaques peuvent également être utilisés, en particulier des procédés en couches de type Hatschek (par exemple tels que décrits dans le document EP1682731, ou EP1678101), etc.

Les exemples suivants non limitatifs illustrent la composition et les performances des mortiers isolants selon l'invention et avec les figures suivantes :
La figure 1 est une image de coupe au microscope électronique à balayage (MEB) de l'intérieur d'une bille millimétrique et poreuse en PS utilisée dans un mortier isolant classique.
La figure 2 est une image au MEB des perlites testées par la Demanderesse dans un mortier à des fins d'isolation thermique.
Les figures 3 et 4 sont des images au MEB de microsphères isolantes en verre pour mortier isolant selon l'invention.
La figure 5 est une image au MEB de microsphères isolantes polymériques pour mortier isolant selon l'invention.
La figure 6 est une photographie d'un mortier isolant classique à billes millimétriques et poreuses en PS.
La figure 7 est une photographie d'un mortier isolant à base de microsphères isolantes selon l'invention.

### EXEMPLES D'ADDITIFS

Le tableau 1 suivant indique les propriétés des matériaux utilisés pour différents mortiers isolants décrits dans les exemples ultérieurs.

**Tableau 1**

| | | | | | | | Densité réelle par pycnomètre à air | |
|---|---|---|---|---|---|---|---|---|
| Nom | Type de matériau | Tailles*** | Taille D50*** | Epaisseur de coque e | D50/ e | Densité réelle*** | | Conductivité thermique (en mW/m.K) |
| R1 | Billes de PS expansé | 1-3 mm | 1,5 mm | - | - | 0,04 | - | 38 |
| C1 | Perlite | 0,2-1 mm | 0,5 mm | - | - | 2 | 0,98 | 47 |
| C2 | Perlite traitée en surface | - | 50 µm | - | | 0,22 | 0,80 | 36 |
| I1 | Microsphèr e de verre | - | 65 µm | 560 nm | 115 | 0,125 | 0,12 | 43 |
| I2 | Microsphèr e de copolymère | - | 40 µm | 300 nm | 133 | 0,042 | 0,04 | 36 |

| | | | | | | | | |
|---|---|---|---|---|---|---|---|---|
| *** : données fournisseur | | | | | | | | |

Le premier additif R1 est largement connu dans les mortiers isolants, par exemple il s'agit du produit dénommé Styropor P570 vendu par la société BASF.

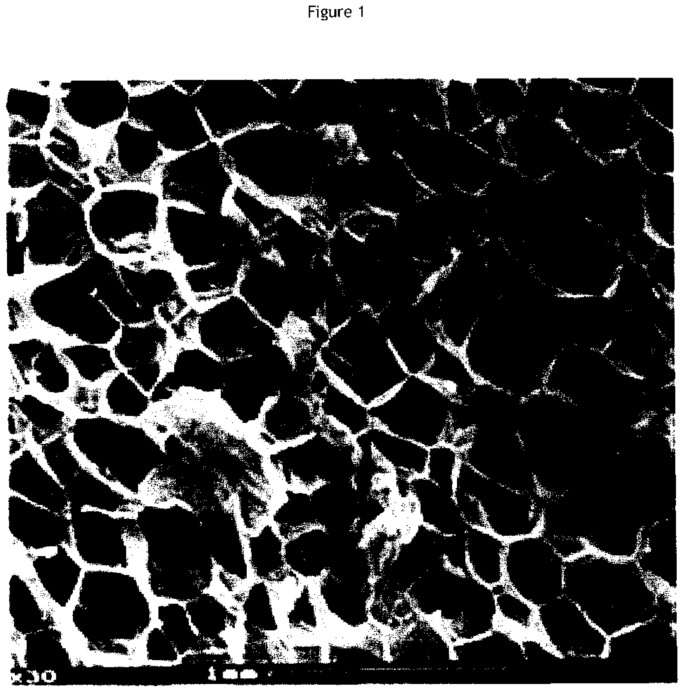

La figure 1 est une image en coupe de l'intérieur d'une telle bille millimétrique et poreuse faite au microscope électronique à balayage (MEB) avec un grossissement de 30. Ces billes sont étanches à l'eau car les pores sont fermés. La barre d'échelle sur la figure 1 est d'1 mm.

Les additifs C1 et C2 ne font pas partie de l'état de la technique des mortiers isolants, mais sont ainsi testés pour mieux comprendre l'invention. Il s'agit de perlite, c'est-à-dire d'une roche volcanique (la rhyolite) qui est expansée, formant des billes poreuses multicellulaires. Il existe des perlites de toutes tailles (de 50 µm à 6 mm) et de conductivité thermique diverse. La prise en eau est typiquement 200-600 %. A des fins de comparaison avec l'invention, nous avons sélectionné des perlites de diamètre submillimétrique et avec une basse conductivité thermique.

La figure 2 est une image au MEB des premières perlites C1 sélectionnées faite avec un grossissement de 200. Il s'agit du produit dénommé Perlite 0/1 vendu par Knauf.

La deuxième perlite C2 est de plus petite taille et de conductivité thermique encore plus basse que C1 et est dotée d'un traitement de surface hydrophobe. Il s'agit du produit dénommé Noblite G200 EC vendu par la société Lafarge Prestia.

Les premiers additifs I1 selon l'invention sont des microsphères microniques unicellulaires, à coque continue en verre borosilicate, à ne pas confondre avec des sphères poreuses multicellulaires de verre de type verre moussé et bien plus grande. Ces microsphères contiennent un mélange d'air et de SO₂ (gaz plus isolant que l'air) en volume relatif d'environ 1/3 - 2/3 respectivement, en légère dépression.

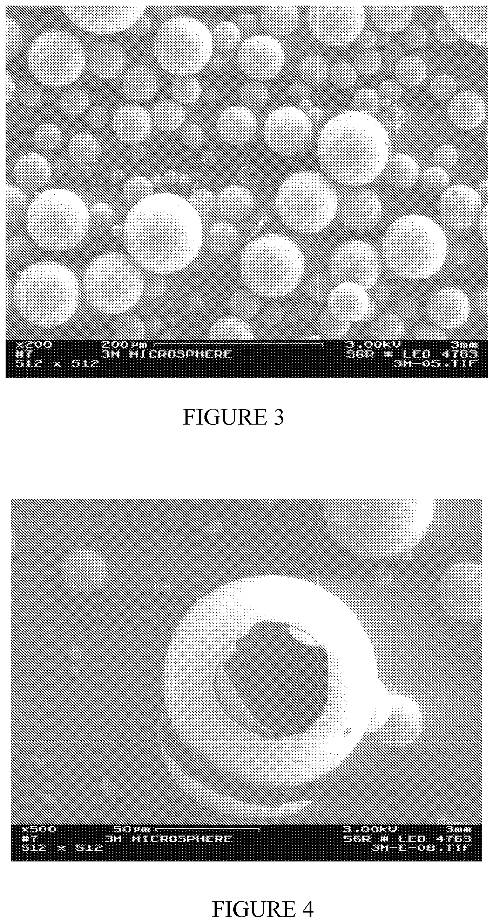

Les figures 3 et 4 sont des images MEB de ces additifs I1 respectivement avec un grossissement de 200 et de 500 et notamment d'une microsphère avec une coque fracturée. Il s'agit du produit de référence K1 vendu par la société 3M.

Les deuxièmes additifs I2 selon l'invention sont des microsphères microniques unicellulaires à coque continue à polymère thermoplastique (mélange de PVC et acrylonitrile) et contenant un gaz plus isolant que l'air (l'isobutane).

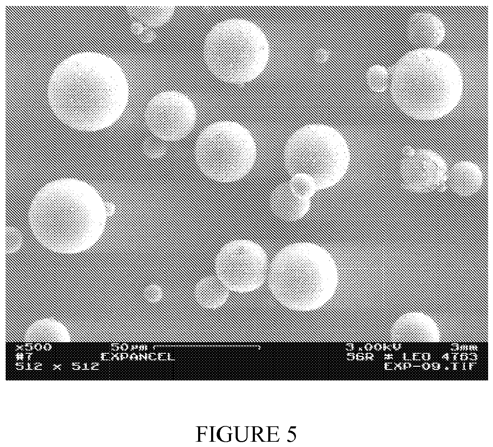

La figure 5 est une image faite au MEB de ces microsphères I2 avec un grossissement de 200. Il s'agit du produit dénommé Expancel 551 DE 40 S42 vendu par Akzo Nobel.

Comme confirmé par les images MEB : très peu de microsphères unicellulaires I1 et I2 sont cassées contrairement aux perlites C1 et C2.

Comme le confirment les valeurs de densité réelles mesurées par pycnomètre à air :
- les perlites C1 et C2 présentent des porosités ouvertes de surface, des fissures, des cassures, l'écart entre la densité réelle mesurée par pycnomètre à air et la densité réelle fournisseur étant significatif,
- les microsphères unicellulaires I1 et I2 ne présentent pas de porosité ouverte de surface, la densité réelle mesurée par pycnomètre à air et la densité réelle fournisseur étant en outre sensiblement égales,

Les microsphères à coque pleine I1 et I2 ont l'avantage :
- d'être moins fragiles en surface car l'ensemble de la matière est concentrée en surface,
- pour une conductivité thermique donnée, d'avoir une densité plus élevée grâce au gaz "encapsulé".

Les microsphères I1 et I2 restent évidemment étanches à l'eau après les opérations de fabrication du mortier, de gâchage et d'application/mise en oeuvre, ce qui n'est pas le cas de perlites C1 et C2 compte tenu de leur fragilité.

### EXEMPLES DE MORTIERS ISOLANTS

On réalise 9 mortiers : un mortier de référence classique à base de billes de PS (A1), deux autres mortiers fabriqués à titre de comparaison qui ne font pas partie de l'état de la technique (A2 et A3) et 6 mortiers à base de microsphères isolantes selon l'invention (B1 à B6).

Pour 8 des 9 mortiers, la composition de mortier comporte :
- un taux X supérieur ou égal à 75% en volume de poudre de mortier d'additif(s) isolant(s) thermiquement,
- un taux Y égal à 100-X % d'ingrédients restants constitués d'un liant et d'éventuels adjuvants dont 84% en volume de poudre des ingrédients restants de ciment Portland 52.5, 15% en volume de poudre des ingrédients restants de chaux aérienne, et de 1% en volume de poudre des ingrédients restants d'adjuvants comprenant un entraîneur d'air de type sulphonate, un éther de cellulose jouant le rôle d'agent rhéologique et rétenteur d'eau, un agent hydrophobant de type stéarate.

Pour l'un des 9 mortiers (B5), les ingrédients restants comportent uniquement du ciment Portland 52.5 (10% en volume de poudre du mortier).

Pour l'ensemble des mortiers, le mélange des ingrédients est réalisé dans un mélangeur de type Rayneri (classique) pendant 3 minutes.

Le tableau 2 suivant indique les différents pourcentages, les types et les proportions d'additifs utilisés.

**Tableau 2**

| Exemples | % additif(s) en volume de poudre du mortier | Additif(s) isolant(s) thermiquement |
|---|---|---|
| A1 | 75% | Bille PS (R1) |
| A2 | 90 % | Perlite (C1) |
| A3 | 90% | Perlite (C2) |
| B1 | 90% | Microsphères de verre I1 |
| B2 | 40 % de I1 et 50% de R1 | Microsphères de verre (I1) et billes PS (R1) |
| B3 | 90% | Microsphères de copolymère (I2) |
| B4 | 80% | Microsphères de copolymère (I2) |
| B5 | 90% | Microsphères de copolymère (I2) |
| B6 | 45% de I1 45% de I2 | Microsphères de verre (I1) et de polymère (I2) |

La pâte fraîche est coulée dans les moules appropriés, puis mûrie pendant 28 jours (à 20°C pendant 7 jours à 100% d'humidité, puis à 20°C et HR 55% pendant 21 jours), puis subissent un séchage final en étuve à 70°C plusieurs jours jusqu'à stabilité de la masse de l'échantillon (correspondant à l'élimination de l'eau libre).

La conductivité thermique est ensuite déterminée sur des échantillons de dimension 15x15x5 cm, à l'aide d'un conductimètre Netzsch HFM 436/3/1 selon la norme EN NF 12664.

La résistance en compression est déterminée avant l'étape de séchage finale à 70°C sur échantillons 4x4x16 cm, selon la norme EN 196.1, à l'aide d'un banc MTS Qtest/5.

Le tableau 3 suivant indique les proportions d'additifs utilisés pour les 9 mortiers isolants réalisés et les performances thermiques mécaniques obtenues.

**Tableau 3**

| Exemples | % additif(s) | Additif(s) isolant(s) thermiquement | Conductivité Thermique (mW/m.K) | Résistance en compression (en MPa) | Aspect |
|---|---|---|---|---|---|
| A1 | 75% | Bille PS (R1) | 65 | 0,7 | Fortes Irrégularités - Mauvais |
| A2 | 90 % | Perlite (C1) | 102,5 | 3 | Lisse - Bon |
| A3 | 90% | Perlite traitée (C2) | 79,3 | 0,63 | Lisse - Bon |
| B1 | 90% | Microsphères de verre (I1) | 48,5 | 0,55 | Lisse - Bon |
| B2 | 40 % de I1 et 50% de R1 | Microsphères de verre (I1) et billes PS (R1) | 33,3 | 0,14 | Irrégularités Acceptables |
| B3 | 90% | Microsphères de copolymère (I2) | 38,9 | 0,38 | Lisse - Bon |
| B4 | 80% | Microsphères de copolymère (I2) | 41,8 | 0,41 | Lisse - Bon |
| B5 | 90% | Microsphères de copolymère (I2) | 40,4 | 0,40 | Lisse - Bon |
| B6 | 45% de I1 et 45% de I2 | Microsphères de verre (I1) et de polymère (I2) | 33,7 | 0,21 | Lisse - Bon |

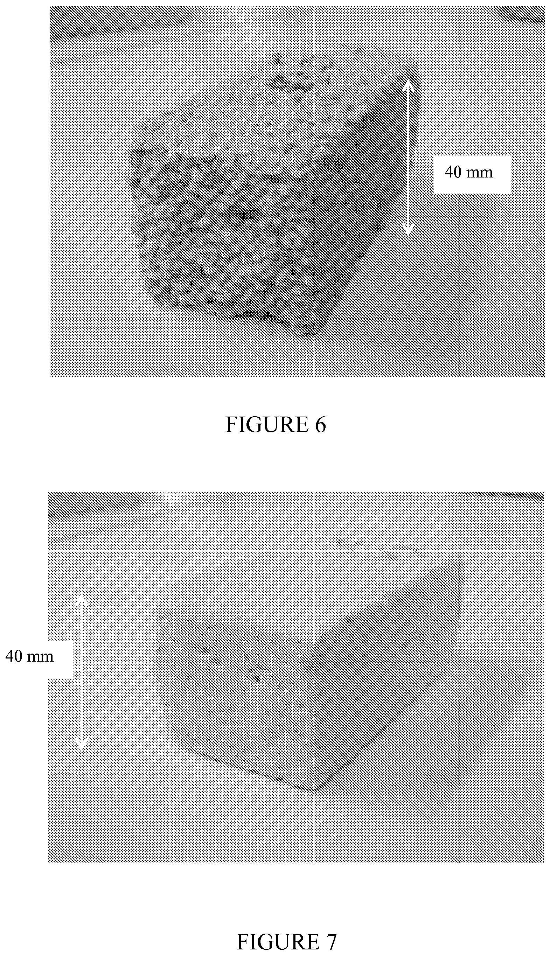

L'échantillon A1 à base de billes de PS expansé présente une conductivité thermique trop élevée. Et en utilisant des taux de PS expansé supérieurs pour les abaisser, la cohésion n'est pas assurée. En outre comme montré en figure 6, la surface du mortier (échantillon A1) est très granuleuse caractéristique des billes PS.

Les échantillons A2 et A3 à base de perlite expansée présentent également des conductivités thermiques trop élevées alors même que la conductivité thermique de la perlite est basse. La porosité de ces billes, le nombre accru de billes cassées, et donc leur prise en eau conduisent à des performances thermiques peu satisfaisantes.

A l'inverse, les échantillons B1 à B6 à base des microsphères creuses selon l'invention (seules ou en complément avec les additifs en PS) présentent d'excellentes conductivités thermiques et une bonne cohésion de couche.

Les meilleures performances thermiques (inférieures à 35 mW/m.K) sont obtenues par mélange d'additifs, soit l'un des additifs I1 (ou I2) et les billes en PS expansé R1 (les microsphères venant remplir les interstices entre les macrobilles R1), soit avec les deux types de microsphères I1 et I2.

Les propriétés mécaniques sont plus grandes quand le taux en microsphères est supérieur à 70%.

Pour les échantillons sans macrobilles R1, l'aspect de surface est particulièrement régulier (pas d'enduit de finition nécessaire) comme montré en figure 6 correspondant à l'échantillon B3.

Les échantillons B3 et B4 à fort taux de microsphères de polymères I2 présentent de la résilience.

Les mortiers selon l'invention peuvent être utilisés notamment comme mortiers de façade sur les parois extérieures verticales ou inclinées de bâtiments ou sous forme de plaques ou de briques comme explicité précédemment, etc.

## Revendications

1. Mortier pulvérulent comprenant au moins un liant hydraulique minéral, au moins 75% en volume par rapport au volume de poudre de mortier d'additifs isolants thermiquement sensiblement en forme de billes et de conductivité thermique inférieure ou égale à 55 mW/m.K **caractérisé en ce que** les additifs isolants thermiquement sont étanches à l'eau et au moins 20% en volume de poudre de mortier desdits additifs, appelés microsphères isolantes, sont unicellulaires, c'est-à-dire dotés d'une coque externe fermée délimitant un cœur formé d'une unique cavité interne, et sont microniques, de dimension caractéristique externe moyenne maximale inférieure à 0,5 mm, la majorité des microsphères isolantes présentant une densité réelle mesurée par pycnomètre à air inférieure ou égale à 0,25.

2. Mortier pulvérulent selon la revendication précédente **caractérisé en ce que** la majorité des microsphères isolantes présente une densité réelle mesurée par pycnomètre à air inférieure ou égale à 0,15.

3. Mortier pulvérulent selon l'une des revendications précédentes **caractérisé en ce que** le rapport entre la dimension externe maximale et l'épaisseur de la coque est supérieur à 60.

4. Mortier pulvérulent selon l'une quelconque des revendications précédentes **caractérisé en ce que** pour la majorité des microsphères isolantes, la conductivité thermique est inférieure ou égale à 50 mW/m.K, voire inférieure ou égale à 45 mW/m.K et le rapport entre la dimension externe maximale et l'épaisseur de la coque est supérieur ou égal à 80, voire à 120.

5. Mortier pulvérulent selon l'une quelconque des revendications précédentes **caractérisé en ce que** pour la majorité des microsphères isolantes, le cœur comporte au moins un gaz plus isolant thermiquement que l'air notamment du SO₂, du CO₂, un gaz organique, notamment hydrocarbonée, tels que l'(iso)pentane, l'(iso)butane, l('iso)octane et leurs mélanges.

6. Mortier pulvérulent selon l'une quelconque des revendications précédentes **caractérisé en ce qu'**au moins une partie des microsphères sont essentiellement inorganiques, notamment en verre, en céramique.

7. Mortier pulvérulent selon l'une quelconque des revendications précédentes **caractérisé en ce qu'**au moins une partie des microsphères isolantes sont essentiellement organiques, notamment en (co)polymère(s) thermoplastique(s), tels que le polychlorure de vinyle et acrylonitrile, le polyéthylène.

8. Mortier pulvérulent selon l'une quelconque des revendications précédentes **caractérisé en ce qu'**il comprend au moins 70% en volume de poudre de mortier des microsphères isolantes et au moins 5% en volume de poudre de mortier de ciment, en particulier Portland.

9. Mortier pulvérulent selon l'une quelconque des revendications précédentes **caractérisé en ce qu'**il comprend :
- de 40% à 60% en volume de poudre de mortier de microsphères isolantes essentiellement organiques,
- de 60% à 40% en volume de poudre de mortier de microsphères isolantes essentiellement inorganiques.

10. Mortier pulvérulent selon l'une quelconque des revendications précédentes **caractérisé en ce qu'**il comprend au moins 80% en volume de poudre de mortier d'additifs isolants thermiques dont :
- de 40% à 60% en volume de poudre du mortier de microsphères isolantes,
- de 55% à 20% en volume de poudre de mortier desdits autres additifs choisis de préférence parmi des billes polymériques, notamment polystyrène, millimétriques et de conductivité thermique inférieure ou égale à 40 mW/m.K.

11. Support, tel qu'une façade de bâtiment, **caractérisé en ce qu'**il est revêtu d'un revêtement à base du mortier pulvérulent selon l'une des revendications 1 à 10 et gâché avec de l'eau, ledit revêtement présentant une épaisseur totale de 1 à 10 cm et une conductivité thermique inférieure ou égale à 52 mW/m.K.

12. Support selon la revendication 11 **caractérisé en ce que** la conductivité thermique du revêtement est inférieure ou égale à 40 mW/m.K, voire à 35 mW/m.K.

13. Support selon l'une des revendications 11 ou 12 **caractérisé en ce que** le revêtement présente une résistance en compression d'au moins 0,3 MPa, voire 0,4 MPa.

14. Plaque de dimensions allant jusqu'à 60x250 cm et d'épaisseur comprise entre 2 mm et 1 cm, obtenue à partir du mortier pulvérulent selon l'une des revendications 1 à 10.

15. Brique ou carreau de dimension de 50x50 cm et d'épaisseur de 5 à 10 cm, obtenu à partir du mortier pulvérulent selon l'une des revendications 1 à 10.

## Patentansprüche

1. Pulverförmiger Mörtel, umfassend mindestens ein mineralisches hydraulisches Bindemittel, mindestens 75 Vol.-%, bezogen auf das Volumen des Mörtelpulvers, wärmeisolierende Zusatzstoffe, im Wesentlichen in Form von Kügelchen und mit einer Wärmeleitfähigkeit von weniger als oder gleich 55 mW/m.K, **dadurch gekennzeichnet, dass** die wärmeisolierenden Zusatzstoffe wasserdicht sind und mindestens 20 Vol.-% des Mörtelpulvers die Zusatzstoffe, die als isolierende Mikrokugeln bezeichnet werden, einzellig sind, das heißt mit einer geschlossenen Außenschale versehen, die einen Kern begrenzt, der durch einen einzigen inneren Hohlraum gebildet ist, und mikronisch sind, mit einer maximalen mittleren charakteristischen Außenabmessung von weniger als 0,5 mm, wobei der Großteil der isolierenden Mikrokugeln eine tatsächliche Dichte, gemessen mit einem Luftpyknometer, von weniger als oder gleich 0,25 aufweist.

2. Pulverförmiger Mörtel nach dem vorstehenden Anspruch, **dadurch gekennzeichnet, dass** der Großteil der isolierenden Mikrokugeln eine tatsächliche Dichte, gemessen mit einem Luftpyknometer, von weniger als oder gleich 0,15 aufweist.

3. Pulverförmiger Mörtel nach einem der vorstehenden Ansprüche, **dadurch gekennzeichnet, dass** das Verhältnis zwischen der maximalen Außenabmessung und der Dicke der Schale größer als 60 ist.

4. Pulverförmiger Mörtel nach einem der vorstehenden Ansprüche, **dadurch gekennzeichnet, dass** bei dem Großteil der isolierenden Mikrokugeln die Wärmeleitfähigkeit weniger als oder gleich 50 mW/m. K oder sogar weniger als oder gleich 45 mW/m.K beträgt und das Verhältnis zwischen der maximalen Außenabmessung und der Dicke der Schale größer als oder gleich 80 oder sogar 120 ist.

5. Pulverförmiger Mörtel nach einem der vorstehenden Ansprüche, **dadurch gekennzeichnet, dass** bei dem Großteil der isolierenden Mikrokugeln der Kern mindestens ein Gas beinhaltet, das wärmeisolierender ist als Luft, insbesondere SO₂, CO₂, ein organisches Gas, insbesondere Kohlenwasserstoffgas, wie (Iso)Pentan, (Iso)Butan, (Iso)Octan und deren Mischungen.

6. Pulverförmiger Mörtel nach einem der vorstehenden Ansprüche, **dadurch gekennzeichnet, dass** mindestens ein Teil der Mikrokugeln im Wesentlichen anorganisch sind, insbesondere aus Glas, aus Keramik.

7. Pulverförmiger Mörtel nach einem der vorstehenden Ansprüche, **dadurch gekennzeichnet, dass** mindestens ein Teil der isolierenden Mikrokugeln im Wesentlichen organisch sind, insbesondere aus thermoplastischem/thermoplastischen (Co)Polymer(en) wie Polyvinylchlorid und Acrylnitril, Polyethylen.

8. Pulverförmiger Mörtel nach einem der vorstehenden Ansprüche, **dadurch gekennzeichnet, dass** er mindestens 70 Vol.-% des Mörtelpulvers die isolierenden Mikrokugeln und mindestens 5 Vol.-% des Mörtelpulvers Zement, besonders Portland, umfasst.

9. Pulverförmiger Mörtel nach einem der vorstehenden Ansprüche, **dadurch gekennzeichnet, dass** er umfasst:
- zu 40 Vol.-% bis 60 Vol.-% des Mörtelpulvers im Wesentlichen organische isolierende Mikrokugeln,
- zu 60 Vol.-% bis 40 Vol.-% des Mörtelpulvers im Wesentlichen anorganische isolierende Mikrokugeln.

10. Pulverförmiger Mörtel nach einem der vorstehenden Ansprüche, **dadurch gekennzeichnet, dass** er mindestens 80 Vol.-% des Mörtelpulvers wärmeisolierende Zusatzstoffe umfasst, davon:
- zu 40 Vol.-% bis 60 Vol.-% des Mörtelpulvers isolierende Mikrokugeln,
- zu 55 Vol.-% bis 20 Vol.-% des Mörtelpulvers die anderen Zusatzstoffe, vorzugsweise ausgewählt aus Polymerkügelchen, insbesondere Polystyrol, die millimetrisch und von einer Wärmeleitfähigkeit von weniger als oder gleich 40 mW/m.K sind.

11. Träger wie eine Gebäudefassade, **dadurch gekennzeichnet, dass** er mit einer Beschichtung auf Basis des pulverförmigen Mörtels nach einem der Ansprüche 1 bis 10 und mit Wasser angemacht beschichtet ist, wobei die Beschichtung eine Gesamtdicke von 1 bis 10 cm und eine Wärmeleitfähigkeit von weniger als oder gleich 52 mW/m.K aufweist.

12. Träger nach Anspruch 11, **dadurch gekennzeichnet, dass** die Wärmeleitfähigkeit der Beschichtung weniger als oder gleich 40 mW/m.K oder sogar 35 mW/m.K beträgt.

13. Träger nach einem der Ansprüche 11 oder 12, **dadurch gekennzeichnet, dass** die Beschichtung eine Druckfestigkeit von mindestens 0,3 MPa oder sogar 0,4 MPa aufweist.

14. Platte mit Abmessungen, die bis zu 60 x 250 cm reichen, und einer Dicke zwischen 2 mm und 1 cm, erhalten ausgehend von dem pulverförmigen Mörtel nach einem der Ansprüche 1 bis 10.

15. Ziegel oder Fliese mit Abmessung von 50 x 50 cm und einer Dicke von 5 bis 10 cm, erhalten ausgehend von dem pulverförmigen Mörtel nach einem der Ansprüche 1 bis 10.

## Claims

1. Pulverulent mortar which is optionally mixed with water and comprises at least one inorganic hydraulic binder, and at least 75% by mortar powder volume of thermally insulating additives which are substantially in the form of beads and have a thermal conductivity of less than or equal to 55 mW/m.K, **characterized in that** the thermally insulating additives are watertight, and at least 20% by mortar powder volume of said additives, which are referred to as insulating microspheres, are unicellular, which means that they have a closed outer shell delimiting a core formed by a single inner cavity, and are micron-scale, with a maximum average outer characteristic size of less than 0.5 mm, a majority of the insulating microspheres have an actual density as measured by air pycnometer of less than or equal to 0.25.

2. Pulverulent mortar of the preceding claim, **characterized in that** the majority of the insulating microspheres have an actual density as measured by air pycnometer of less than or equal to 0.15.

3. Pulverulent mortar of any of the preceding claims, **characterized in that** the ratio between the maximum outer size and the thickness of the shell is greater than 60.

4. Pulverulent mortar of any of the preceding claims, **characterized in that** the majority of the insulating microspheres, the thermal conductivity is less than or equal to 50 mW/m.K, or even less than or equal to 45 mW/m.K, and the ratio between the maximum outer size and the thickness of the shell is greater than or equal to 80, or even to 120.

5. Pulverulent mortar of any of the preceding claims, **characterized in that** the majority of the insulating microspheres, the core comprises at least one gas which is more thermally insulating than air, in particular SO₂, CO₂, an organic gas, in particular a hydrocarbon gas, such as (iso)pentane, (iso)butane, (iso)octane and mixtures thereof.

6. Pulverulent mortar of any of the preceding claims, **characterized in that** at least some of the microspheres are essentially inorganic, in particular made of glass, made of ceramic.

7. Pulverulent mortar of any of the preceding claims, **characterized in that** at least some of the insulating microspheres are essentially organic, in particular made of thermoplastic (co)polymer(s), such as polyvinyl chloride and acrylonitrile, polyethylene.

8. Pulverulent mortar of any of the preceding claims, **characterized in that** it comprises at least 70% by mortar powder volume of the insulating microspheres and at least 5% by mortar powder volume of cement, more particularly Portland cement.

9. Pulverulent mortar of any of the preceding claims, **characterized in that** it comprises:
- from 40% to 60% by mortar powder volume of essentially organic insulating microspheres,
- from 60% to 40% by mortar powder volume of essentially inorganic insulating microspheres.

10. Pulverulent mortar of any of the preceding claims, **characterized in that** it comprises at least 80% by mortar powder volume of thermal insulating additives, including:
- from 40% to 60% by mortar powder volume of insulating microspheres,
- from 55% to 20% by mortar powder volume of said other additives, selected preferably from polymeric beads, in particular polystyrene beads, which are millimeter-scale and have a thermal conductivity of less than or equal to 40 mW/m.K.

11. Substrate such as a building façade, **characterized in that** it is coated at least partly with a coating based on the pulverulent mortar of any of claims 1 to 10 mixed with water and having a thermal conductivity of less than or equal to 52 mW/m.K.

12. Substrate of claim 11, **characterized in that** the thermal conductivity of the coating is less than or equal to 40 mW/m.K, or even than or to 35 mW/m.K.

13. Substrate of either of claims 11 and 12, **characterized in that** the coating has a compressive strength of at least 0.3 MPa, or even 0.4 MPa.

14. Sheet with dimensions of up to 60 × 250 cm, and with a thickness of between 2 mm and 1 cm, obtained from the pulverulent mortar of any of claims 1 to 10.

15. Brick with dimensions of the order of 50 × 50 cm and with a thickness of the order of 5 to 10 cm, obtained from the pulverulent mortar of any of claims 1 to 10
